(19)

**Europäisches Patentamt**
**European Patent Office**
**Office européen des brevets**

(11) **EP 4 155 134 A1**

(12) **EUROPEAN PATENT APPLICATION**

(43) Date of publication:
**29.03.2023 Bulletin 2023/13**

(21) Application number: **22193982.0**

(22) Date of filing: **05.09.2022**

(51) International Patent Classification (IPC):
**B60R 13/04** (2006.01)   **B60Q 5/00** (2006.01)
**B60R 19/48** (2006.01)   **G10K 9/00** (2006.01)

(52) Cooperative Patent Classification (CPC):
**B60R 19/48; B60Q 5/00; B60R 13/04; G10K 9/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 JP 2021157154**

(71) Applicant: **Toyoda Gosei Co., Ltd.**
**Kiyosu-shi, Aichi 452-8564 (JP)**

(72) Inventors:
• **TANAKA, Mitsue**
  **Kiyosu-shi,, 452-8564 (JP)**
• **ISHII, Takumi**
  **Kiyosu-shi, 452-8564 (JP)**

(74) Representative: **Kramer Barske Schmidtchen Patentanwälte PartG mbB**
**European Patent Attorneys**
**Landsberger Strasse 300**
**80687 München (DE)**

(54) **VEHICLE SOUND OUTPUT DEVICE AND VEHICLE SOUND PROPAGATION DEVICE**

(57)   A vehicle sound output device (1) includes a sound generation unit (10) configured to generate a sound having a predetermined frequency, a double wall (20) disposed on a vehicle outer side with respect to the sound generation unit (10), and including an inner wall portion (21) and an outer wall portion (22) which are separated from each other in a vehicle inner-outer direction, and an intermediate layer (30) which is formed in a closed space between the inner wall (21) portion and the outer wall portion (22) and through which the sound is transmitted.

*FIG. 2*

**Description**

TECHNICAL FIELD

The present disclosure relates to a vehicle sound output device and a vehicle sound propagation device to be mounted to a vehicle.

BACKGROUND ART

In the related art, a vehicle sound output device to be mounted to a vehicle has been known (for example, JP-A-2004-330852).
The vehicle sound output device described in JP-A-2004-330852 is provided with a sound generation unit such as a horn or a speaker, and is a device which allows a person around the vehicle to hear the sound generated by the sound generation unit. The sound generation unit is disposed on a vehicle inner side (that is, on a vehicle rear side) with respect to a radiator grille or a front bumper as an exterior panel of the vehicle.
In the above sound output device, the sound generated by the sound generation unit is emitted to a vehicle outer side through an opening provided in the exterior panel or a cover component. In particular, if the sound generation unit is disposed on the vehicle inner side near the opening of the exterior panel or the like, the sound generated by the sound generation unit is easily emitted to the vehicle outer side through the opening. Therefore, the sound can be easily propagated over a wide range even with a small output. In this regard, if the exterior panel or the like is provided with an opening as described above, it is easier for a person outside the vehicle to hear the sound generated by the sound generation unit.
However, in recent years, the opening of the exterior panel or the like tends to be reduced in size due to the progress of EVs in vehicles and the request for improved fuel efficiency. Thus, in a structure where the opening of the exterior panel or the like is reduced in size or eliminated, the sound generated by the sound generation unit is easily reflected on a back surface of the exterior panel or the like, and the sound transmitted through the opening from the vehicle inner side to a vehicle outer side is reduced as compared to a structure with a large opening. Therefore, it may be difficult for a person outside the vehicle to hear the sound generated by the sound generation unit.

SUMMARY OF INVENTION

The present disclosure has been made in view of the above circumstances, and an object of the present disclosure is to provide a vehicle sound output device and a vehicle sound propagation device which can appropriately propagate a sound generated by a sound generation unit disposed on a vehicle inner side from the vehicle inner side to a vehicle outer side without passing through a panel opening.
An aspect of the present disclosure relates to a vehicle sound output device including: a sound generation unit configured to generate a sound having a predetermined frequency; a double wall disposed on a vehicle outer side with respect to the sound generation unit, and including an inner wall portion and an outer wall portion which are separated from each other in a vehicle inner-outer direction; and an intermediate layer which is formed in a closed space between the inner wall portion and the outer wall portion and through which the sound is transmitted.
According to such a configuration, the sound having a predetermined frequency and generated by the sound generation unit can be resonance-transmitted from the inner wall portion of the double wall to the outer wall portion via the intermediate layer, and propagated to the vehicle outer side with respect to the outer wall portion. Therefore, the sound generated by the sound generation unit can be appropriately propagated from the vehicle inner side to the vehicle outer side without passing through a panel opening provided in the wall.
Another aspect of the present disclosure relates to a vehicle sound propagation device including: a double wall disposed on a vehicle outer side with respect to a sound generation unit configured to generate a sound having a predetermined frequency, and including an inner wall portion and an outer wall portion which are separated from each other in a vehicle inner-outer direction; and an intermediate layer which is formed in a closed space between the inner wall portion and the outer wall portion and through which the sound is transmitted.
According to such a configuration, the sound having a predetermined frequency and generated by the sound generation unit can be resonance-transmitted from the inner wall portion of the double wall to the outer wall portion via the intermediate layer, and propagated to the vehicle outer side with respect to the outer wall portion. Therefore, the sound generated by the sound generation unit can be appropriately propagated from the vehicle inner side to the vehicle outer side without passing through a panel opening provided in the wall.

BRIEF DESCRIPTION OF DRAWINGS

Fig. 1 is a perspective view of a vehicle mounted with a vehicle sound output device and a vehicle sound propagation device according to a first embodiment of the present disclosure.

Fig. 2 is a configuration diagram of the vehicle sound output device including the vehicle sound propagation device according to the first embodiment.

Fig. 3 is a diagram in which a relationship between a sound frequency and a transmission loss with a double wall (illustrated by a solid line) and a relationship between a sound frequency and a transmission loss with a single wall (illustrated by a broken line) are compared.

Fig. 4 is a configuration diagram of a vehicle sound output device including a vehicle sound propagation device according to a second embodiment.

Fig. 5 is a configuration diagram of a vehicle sound output device including a vehicle sound propagation device according to a third embodiment.

Fig. 6 is a configuration diagram of a vehicle sound output device including a vehicle sound propagation device according to a first modification.

Fig. 7 is a configuration diagram of a vehicle sound output device including a vehicle sound propagation device according to a second modification.

Fig. 8 is an exploded perspective view of the vehicle sound output device including the vehicle sound propagation device illustrated in Fig. 7.

DESCRIPTION OF EMBODIMENTS

Hereinafter, specific embodiments of a vehicle sound output device and a vehicle sound propagation device according to the present disclosure will be described.

[First Embodiment]

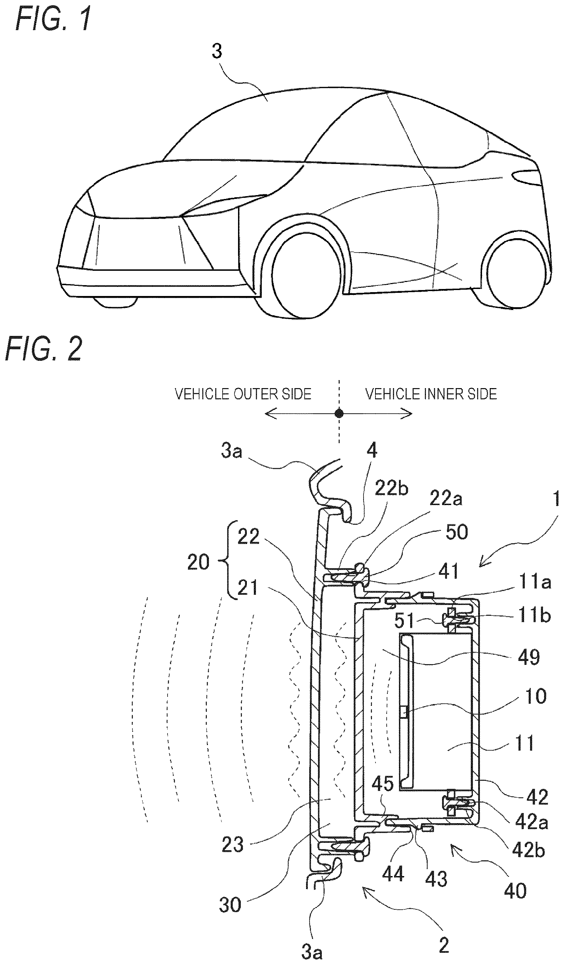

A vehicle sound output device 1 according to the present embodiment is a device mounted on a vehicle 3 to let a person around the vehicle hear a sound generated by a sound generation unit. A vehicle sound propagation device 2 is a device which propagates the sound generated by the sound generation unit toward a person around the vehicle. The vehicle 3 on which the vehicle sound output device 1 is mounted may be a vehicle in which an exterior panel is provided with an opening for taking in air into an engine room. The vehicle 3 may be, in particular, an electric vehicle or the like in which the exterior panel is not provided with the above opening, or even when the above opening is provided, an opening area is relatively small (see Fig. 1).

As illustrated in Fig. 2, the vehicle sound output device 1 includes a sound generation unit 10, a double wall 20, and an intermediate layer 30. The vehicle sound propagation device 2 is a device in which the sound generation unit 10 is removed from the vehicle sound output device 1, and includes the double wall 20 and the intermediate layer 30.

The sound generation unit 10 is a device which generates a sound having a predetermined frequency to a vehicle outer side. The sound generation unit 10 includes a horn which generates a warning sound to a person around the vehicle 3, an approach notification device which notifies a person approaching the vehicle 3, and a speaker which generates a human voice or a musical instrument sound. The sound generation unit 10 is disposed in an inner side with respect to the exterior panel of the vehicle 3. The sound generation unit 10 can generate a sound having a sound pressure level which conforms to the regulations and the like. In addition, the sound generation unit 10 generates a sound having a predetermined frequency.

The predetermined frequency of the sound generated by the sound generation unit 10 is a frequency in an audible sound region, for example, between 20 Hz and 20,000 Hz. The predetermined frequency of the sound generated by the sound generation unit 10 includes not only a frequency which is a basis of the sound generated by the sound generation unit 10 (fundamental frequency), but also a frequency which is two or more positive multiples with respect to the fundamental frequency. When the sound generation unit 10 is a horn, the fundamental frequency of the sound is defined, for example, between 270 Hz and 600 Hz, and is such as 370 Hz, 400 Hz, 480 Hz, and 500 Hz. When the sound generation unit 10 generates an approach notification sound, the fundamental frequency of the sound is defined, for example, between 20 Hz and 5,000 Hz.

The sound generation unit 10 is attached to a housing 11. The housing 11 is formed in a box shape (for example, a rectangular parallelepiped shape) to be able to accommodate the sound generation unit 10. The housing 11 is disposed in the vehicle 3 such that the sound generated by the sound generation unit 10 can easily travel toward a vehicle outer side. The sound generation unit 10 is oriented such that the generated sound can easily travel toward the vehicle outer side in a state where the housing 11 is disposed in the vehicle 3.

The double wall 20 is a wall which separates the sound generation unit 10 from the vehicle outer side. The double wall 20 is disposed on the vehicle outer side with respect to the sound generation unit 10. The double wall 20 includes an inner wall portion 21 and an outer wall portion 22. The inner wall portion 21 and the outer wall portion 22 are disposed apart from each other in a vehicle inner-outer direction. That is, the inner wall portion 21 is disposed closer to the sound generation unit 10 than the outer wall portion 22, and the outer wall portion 22 is disposed farther from the sound generation unit 10 than the inner wall portion 21. A hollow space 23 is formed between the inner wall portion 21 and the outer wall portion 22. The double wall 20 transmits the sound generated by the sound generation unit 10 from the vehicle inner side to the vehicle outer side by resonance between the inner wall portion 21 and the outer wall portion 22.

The outer wall portion 22 is the outermost shell of the vehicle 3 and is an exterior panel or a cover component facing the outside of the vehicle. The outer wall portion 22 is formed in a plate shape having no or almost no opening. The outer wall portion 22 is, for example, a grill, a bumper, a fender, a bonnet, a headlight cover, a pillar, a roof, or a side mirror cover. The outer wall portion 22 is formed of a resin material or a metal material. The outer wall portion 22 is attached and fixed to a structure 3a such as a frame, an exterior panel, and a cover provided on the vehicle 3. The outer wall portion 22 is disposed to close an opening 4 provided in the structure 3a.

The inner wall portion 21 is a plate-shaped member. The inner wall portion 21 is disposed on the vehicle inner side with respect to the outer wall portion 22, and faces the outer wall portion 22 with the intermediate layer 30 described in detail later sandwiched between the inner wall portion 21 and the outer wall portion 22. The inner wall portion 21 can vibrate by the sound having a predetermined frequency and generated by the sound generation unit 10. The vibration caused by the sound of the inner wall portion 21 is propagated to the outer wall portion 22 using the intermediate layer 30 as a spring. The outer wall portion 22 can vibrate in resonance with the vibration of the inner wall portion 21.

The inner wall portion 21 is provided on a bracket 40. The bracket 40 is attached to a back surface (inner surface) of the outer wall portion 22. The bracket 40 is formed of a resin material or a metal material. The material of the bracket 40 may be the same as the material of the outer wall portion 22. The inner wall portion 21 is formed of a thickness and a material which can vibrate by the sound generated by the sound generation unit 10. The thickness of the inner wall portion 21 is, for example, 2 mm to 5 mm. The outer wall portion 22 is formed of a thickness and a material which can vibrate in resonance with the vibration of the inner wall portion 21. The thickness of the outer wall portion 22 may be the same as the thickness of the inner wall portion 21, and is, for example, 2 mm to 5 mm. In the present embodiment, the inner wall portion 21 is integrated with a surrounding portion 42 described later as a part of the bracket 40, but may be provided separately from the bracket 40 and may be attached to and integrated with the surrounding portion 42 as the bracket 40.

The bracket 40 includes the inner wall portion 21, an attachment portion 41, and the surrounding portion 42. The attachment portion 41 is a through hole that an attachment tool 50 such as a bolt or a screw for attaching the bracket 40 on the back surface of the outer wall portion 22 penetrates. A plurality of attachment portions 41 are provided on a peripheral edge portion of the plate-shaped inner wall portion 21.

The outer wall portion 22 includes a fixing portion 22a to which the attachment tool 50 is fixed. The fixing portion 22a is formed on a back surface side of the outer wall portion 22. The fixing portion 22a is an attachment hole formed in a protruding portion 22b protruding to the vehicle inner side from the back surface of the outer wall portion 22. The bracket 40 is attached to the outer wall portion 22 by the attachment tool 50 penetrating the attachment portion 41 and being fixed to the fixing portion 22a of the outer wall portion 22.

The protruding portion 22b is formed in an annular shape along a peripheral edge of the inner wall portion 21. In a state where the bracket 40 is attached to the outer wall portion 22, the hollow space 23 between the inner wall portion 21 and the outer wall portion 22 is surrounded by the annular protruding portion 22b over an entire periphery. That is, the hollow space 23 is closed by a front surface of the inner wall portion 21, the back surface of the outer wall portion 22, and an inner side surface of the protruding portion 22b.

The surrounding portion 42 is a portion which surrounds an entire periphery of the housing 11 (particularly, the sound generation unit 10) described above. The surrounding portion 42 extends in a cylindrical shape from a sound generation unit 10 side to the vehicle inner surface side of the inner wall portion 21. The surrounding portion 42 includes a bottom wall portion in which a cylinder end on the sound generation unit 10 side is closed, and an opening in which a cylinder end on an inner wall portion 21 side is open. The housing 11 is attached and fixed to a bottom portion of the surrounding portion 42 at an inner end of the vehicle such that the entire periphery thereof is surrounded by the cylindrical wall of the surrounding portion 42.

The housing 11 includes a flange portion 11a extending radially outward from an outer peripheral surface thereof. The flange portion 11a includes an attachment portion 11b. The attachment portion 11b is a through hole that an attachment tool 51 such as a bolt or a screw for attaching the surrounding portion 42 to the housing 11 penetrates. A plurality of flange portions 11a and attachment portions 11b are provided on the entire periphery of the housing 11.

The surrounding portion 42 includes a fixing portion 42a to which the attachment tool 51 is fixed. The fixing portion 42a is formed on a front surface side of the surrounding portion 42. The fixing portion 42a is an attachment hole formed in a protruding portion 42b protruding to the vehicle outer side from a front surface of the surrounding portion 42. The housing 11 is attached to the surrounding portion 42 by the attachment tool 51 penetrating the attachment portion 11b and being fixed to the fixing portion 42a of the surrounding portion 42. A plurality of fixing portions 42a and protruding portions 42b are provided on the surrounding portion 42 corresponding to the flange portions 11a and the attachment portions 11b of the housing 11.

The surrounding portion 42 is attached to, fixed to, and integrated with the inner wall portion 21. The surrounding portion 42 is detachably engaged with the inner wall portion 21 in a state where the housing 11 is attached and fixed. When the surrounding portion 42 is attached to the inner wall portion 21 in a state where the housing 11 is attached and fixed to the surrounding portion 42, the housing 11 and thus the sound generation unit 10 attached to the housing 11 are disposed in a space 49 closed by the inner wall portion 21 and the surrounding portion 42. The closed space 49 serves as a guide path for guiding the sound generated by the sound generation unit 10 to the double wall 20.

The surrounding portion 42 and the inner wall portion 21 respectively include an engaging portion 43 and an engaging portion 44 which engage with each other. The engaging portion 43 of the surrounding portion 42 is an engaging projection for engaging the surrounding portion 42 with the engaging portion 44 of the inner wall portion 21. The engaging portion 43 is formed on a cylindrical side wall of the surrounding portion 42 so as to protrude radially outward from an outer peripheral surface thereof. The engaging portion 44 of the inner wall portion 21 is an engaging hole with which the engaging portion 43 is engaged. The engaging portion 44 is formed on a back surface side of the inner wall portion 21. The engaging portion 44 is formed so as to penetrate, in a radial direction, a protruding portion 45 protruding to the vehicle inner side from a back surface of the inner wall portion 21. A plurality of engaging portions 43 of the surrounding portion 42 and a plurality of engaging portions 44 of the inner wall portion 21 are provided corresponding to each other.

As a method of attaching the bracket 40 to the outer wall portion 22, the attachment tool 50 such as a bolt or a screw is used. Alternatively, double-sided tape fixing, heat welding, ultrasonic welding, or the like may be used instead of the above attaching method as long as the bracket 40 is in close contact with the outer wall portion 22 and the hollow space 23 is closed. As a method of attaching the housing 11 to the surrounding portion 42 of the bracket 40, the attachment tool 51 such as a bolt or a screw is used. Alternatively, double-sided tape fixing, heat welding, ultrasonic welding, or the like may be used instead of this attaching method. As a method of attaching the surrounding portion 42 to the inner wall portion 21 of the bracket 40, the engaging portions 43 and 44 which engage with each other are used. Alternatively, detachable screwing or the like may be used instead of this attaching method.

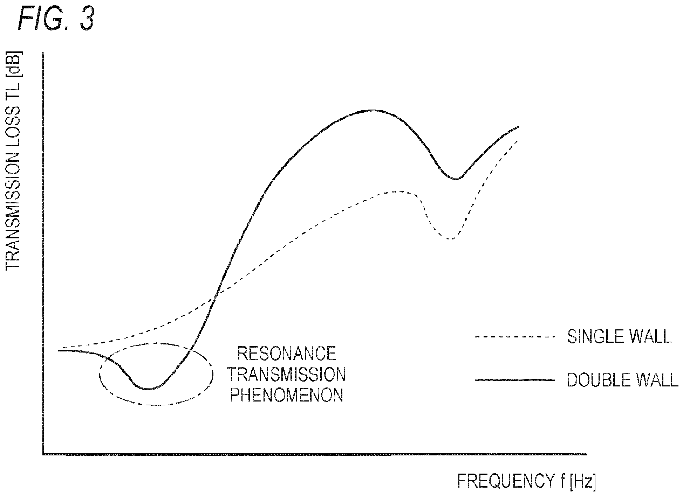

The intermediate layer 30 is an air layer between the inner wall portion 21 and the outer wall portion 22 in the double wall 20. That is, the intermediate layer 30 is the hollow space 23. A thickness (that is, a width in the vehicle inner-outer direction) or a volume of the intermediate layer 30 is set so as to cause a resonance transmission phenomenon (see Fig. 3) in which the sound is transmitted from the inner wall portion 21 to the outer wall portion 22 according to the frequency of the sound generated by the sound generation unit 10. Specifically, the intermediate layer 30 is defined according to the following equation (1).

[Math. 1]

$$f_{rmd} = \frac{1}{2\pi} \cdot \sqrt{\frac{\rho \cdot c^2}{d} \cdot \frac{m1+m2}{m1 \cdot m2}} \quad \cdots (1)$$

$f_{rmd}$ is the frequency [Hz] of the sound generated by the sound generation unit 10, d is the thickness [mm] of the intermediate layer 30, $\rho$ is a density [kg/m$^3$] of a gas enclosed in the intermediate layer 30, c is a speed [m/s] of the sound in the gas in the intermediate layer 30, m1 is a surface density [kg/m$^2$] of the inner wall portion 21, and m2 is a surface density [kg/m$^2$] of the outer wall portion 22. Since the intermediate layer 30 is an air layer, $\rho$ is 1.2 [kg/m$^3$] and c is 343.7 [m/s].

Next, an operation of the vehicle sound output device 1 including the vehicle sound propagation device 2 will be described.

The sound generation unit 10 generates a sound having a predetermined frequency. The sound having a predetermined frequency and generated by the sound generation unit 10 propagates through the space 49 in the bracket 40 and reaches the inner wall portion 21. The sound which reaches the inner wall portion 21 is resonance-transmitted from the inner wall portion 21 to the outer wall portion 22 via the intermediate layer 30, and is propagated from the outer wall portion 22 to the vehicle outer side. Therefore, it is possible to make it easier for a person around the vehicle 3 to hear the sound generated by the sound generation unit 10 of the vehicle 3, and it is possible to draw attention using the sound generated by the sound generation unit 10.

In the configuration of the vehicle sound output device 1 and the vehicle sound propagation device 2, the sound generated by the sound generation unit 10 disposed on the vehicle inner side is resonance-transmitted through the double wall 20 and is propagated to the vehicle outer side. At this time, sound insulation performance of the double wall 20 is greatly reduced. Therefore, the sound having a predetermined frequency and generated by the sound generation unit 10 can be appropriately propagated from the vehicle inner side to the vehicle outer side without passing through an opening that facilitates propagation of the sound.

Therefore, even in an electric vehicle or the like in which an opening is not provided in the exterior panel or the cover component (that is, the outer wall portion 22) of the vehicle 3, or the opening is provided but the opening area is small, it is not necessary to ensure an opening which facilitates the propagation of the sound and it is possible to achieve both sound propagation and attachment freedom of the sound generation unit 10 since the sound generation unit 10 can be disposed on the vehicle inner side to let a person around the vehicle 3 hear the sound having a predetermined frequency and generated by the sound generation unit 10.

The sound generation unit 10 is surrounded by the surrounding portion 42 over the entire periphery, and is disposed in the space 49 closed by the inner wall portion 21 and the surrounding portion 42. In this configuration, the sound generated by the sound generation unit 10 can be confined in the space 49 and does not easily leak from the space 49, and most of the sound can reach the inner wall portion 21. Therefore, the sound generated by the sound generation unit 10 can be efficiently propagated to the double wall 20 to cause a resonance transmission phenomenon in the double wall 20 and the intermediate layer 30.

The sound generation unit 10 is attached to the housing 11, and the housing 11 is attached and fixed to the bracket 40 attached to the outer wall portion 22 constituting the double wall 20. That is, the sound generation unit 10 is fixed to the back surface of the double wall 20. In this configuration, the sound generation unit 10 can be disposed close to the double wall 20.

[Second Embodiment]

In the vehicle sound output device 1 according to the first embodiment described above, the inner wall portion 21 of the bracket 40 and the surrounding portion 42 are engaged and integrated with each other, and the sound generation unit 10 is disposed so as to face the inner wall portion 21 on the vehicle inner side with respect to the inner wall portion 21 in a state of being attached to the surrounding portion 42 of the bracket 40. In addition, the sound generation unit 10 is accommodated and attached to the housing 11, and the sound generation unit 10 is fixed to a double wall 20 side.

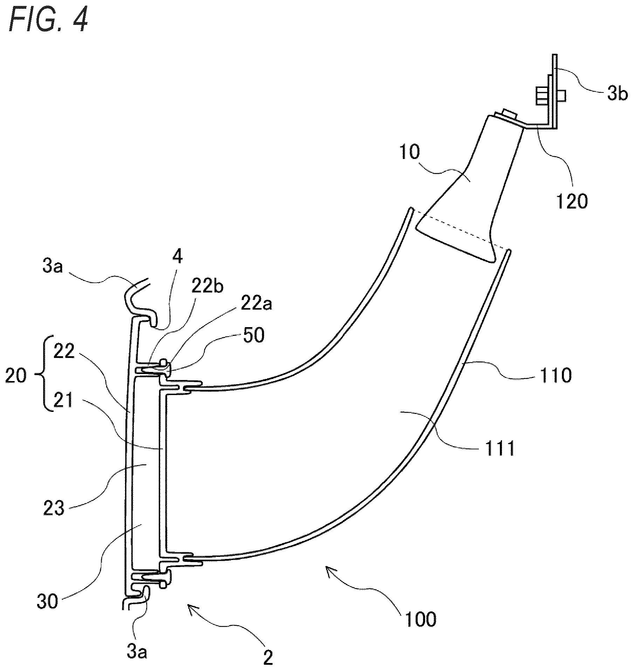

In contrast, in a vehicle sound output device 100 according to the present embodiment, as illustrated in Fig. 4, the sound generation unit 10 is disposed on the vehicle inner side with respect to the inner wall portion 21, but is disposed relatively far from the inner wall portion 21, and a guide path for guiding the sound generated by the sound generation unit 10 to the double wall 20 is formed between the sound generation unit 10 and the inner wall portion 21. In addition, the sound generation unit 10 is fixed to a structure 3b on an inner side of the vehicle 3 instead of being fixed to the double wall 20 side. In Fig. 4, the same components as those illustrated in Fig. 2 are designated by the same reference numerals, and the description thereof is omitted or simplified.

The vehicle sound output device 100 includes a guide wall 110. The guide wall 110 is a guide wall which forms a guide path 111 for guiding the sound having a predetermined frequency and generated by the sound generation unit 10 to the double wall 20. The guide wall 110 extends in a cylindrical shape from the sound generation unit 10 side to the vehicle inner surface side of the inner wall portion 21. As illustrated in Fig. 4, when the sound generation unit 10 does not face the inner wall portion 21, the guide wall 110 and the guide path 111 are formed so as to be curved from the sound generation unit 10 to the inner wall portion 21.

The guide wall 110 is attached to the back surface of the inner wall portion 21 and is integrated with the inner wall portion 21. The guide wall 110 is attached to the inner wall portion 21 by fitting a claw or fastening a bolt. The sound generation unit 10 is attached to the structure 3b on the inner side of the vehicle 3 via an attachment bracket 120 by bolting or the like without being attached to the guide wall 110. As long as the sound generated by the sound generation unit 10 effectively propagates through the guide path 111, as illustrated in Fig. 4, the sound generation unit 10 may be disposed so as to enter and cover an inside of the guide path 111 from a sound inlet end of the guide wall 110, or may be disposed outside the guide path 111 from the sound inlet end of the guide wall 110.

In the vehicle sound output device 100, the sound having a predetermined frequency and generated by the sound generation unit 10 propagates through the guide path 111 in the guide wall 110 and reaches the inner wall portion 21. The sound which reaches the inner wall portion 21 is resonance-transmitted from the inner wall portion 21 to the outer wall portion 22 via the intermediate layer 30, and is propagated from the outer wall portion 22 to the vehicle outer side. Therefore, in the vehicle sound output device 100, it is also possible to make it easier for a person around the vehicle 3 to hear the sound generated by the sound generation unit 10 of the vehicle 3, and it is also possible to draw attention using the sound generated by the sound generation unit 10. Therefore, the sound having a predetermined frequency and generated by the sound generation unit 10 can be appropriately propagated from the vehicle inner side to the vehicle outer side without passing through an opening which facilitates propagation of the sound, and the effect same as that of the first embodiment described above can be obtained.

The sound generation unit 10 is disposed relatively far from the inner wall portion 21 of the double wall 20, and the sound generated by the sound generation unit 10 propagates through the guide path 111 of the guide wall 110 and is guided to the double wall 20. Therefore, even when the sound generation unit 10 has to be disposed far from the double wall 20, the sound generated by the sound generation unit 10 can be guided to the double wall 20 through the guide path 111 and is resonance-transmitted.

In the second embodiment described above, the guide wall 110 is separate from the inner wall portion 21, and is attached to and integrated with the back surface of the inner wall portion 21. However, the present disclosure is not limited to this, and the guide wall 110 and the inner wall portion 21 may be integrally formed with each other.

[Third Embodiment]

In the second embodiment described above, the guide wall 110 is attached to the back surface of the inner wall portion 21 without a gap, and a sound outlet end of the guide path 111 is in contact with the back surface of the inner wall portion 21.

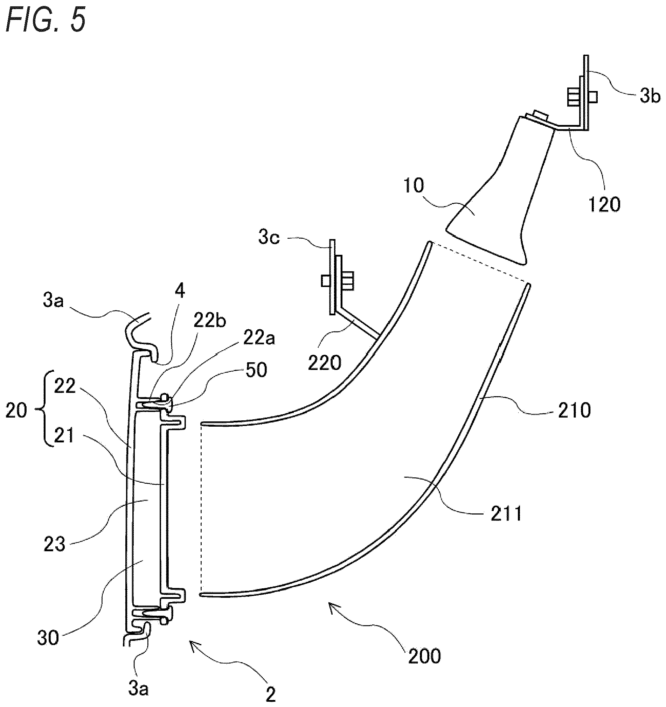

In contrast, in a vehicle sound output device 200 according to the present embodiment, as illustrated in Fig. 5, a guide wall 210 is disposed far from the back surface of the inner wall portion 21, and a gap is formed between the sound outlet end of a guide path 211 and the back surface of the inner wall portion 21. In Fig. 5, the same components as those illustrated in Figs. 2 and 4 are designated by the same reference numerals, and the description thereof is omitted or simplified.

The vehicle sound output device 200 includes the guide wall 210. The guide wall 210 is a guide wall which forms a guide path 211 for guiding the sound having a predetermined frequency and generated by the sound generation unit 10 to the double wall 20. The guide wall 210 extends in a cylindrical shape from the sound generation unit 10 side to the vehicle inner surface side of the inner wall portion 21. As illustrated in Fig. 5, when the sound generation unit 10 does not face the inner wall portion 21, the guide wall 210 and the guide path 211 are formed so as to be curved from the sound generation unit 10 to the inner wall portion 21.

The guide wall 210 is disposed from the back surface of the inner wall portion 21 toward the vehicle inner side. The guide wall 210 is attached to a structure 3c on the inner side of the vehicle 3 via an attachment bracket 220 by bolting or the like. A gap distance at which the guide wall 210 separates from the back surface of the inner wall portion 21 may be such that the sound generated by the sound generation unit 10 and propagating through the guide path 211 effectively reaches the inner wall portion 21 and is resonance-transmitted through the double wall 20. The sound generation unit 10 is attached to the structure 3b on the inner side of the vehicle 3 via the attachment bracket 120 without being attached to the guide wall 210. As long as the sound generated by the sound generation unit 10 effectively propagates through the guide path 211, the sound generation unit 10 may be disposed so as to enter and cover an inside of the guide path 211 from a sound inlet end of the guide wall 210, or as shown in Fig. 5, may be disposed outside the guide path 211 from the sound inlet end of the guide wall 210.

In the vehicle sound output device 200, the sound having a predetermined frequency and generated by the sound generation unit 10 propagates through the guide path 211 in the guide wall 210 and reaches the inner wall portion 21. The sound which reaches the inner wall portion 21 is resonance-transmitted from the inner wall portion 21 to the outer wall portion 22 via the intermediate layer 30, and is propagated from the outer wall portion 22 to the vehicle outer side. Therefore, in the vehicle sound output device 200, it is also possible to make it easier for a person around the vehicle 3 to hear the sound generated by the sound generation unit 10 of the vehicle 3, and it is also possible to draw attention using the sound generated by the sound generation unit 10. Therefore, the sound having a predetermined frequency and generated by the sound generation unit 10 can be appropriately propagated from the vehicle inner side to the vehicle outer side without passing through an opening which facilitates propagation of the sound, and the effect same as that of the first embodiment and the second embodiment described above can be obtained.

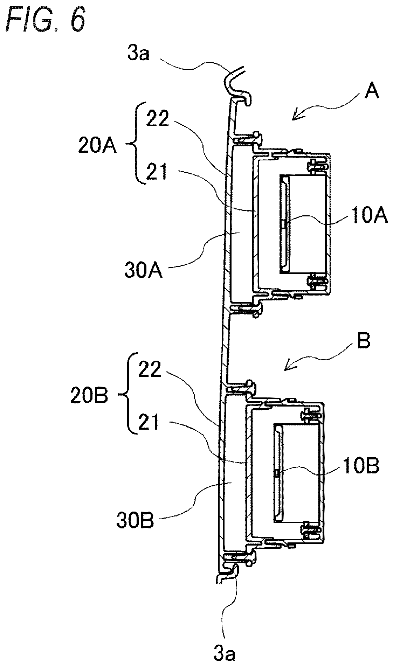

In the first to third embodiments described above, the frequency of the sound generated by the sound generation unit 10 is set to a frequency within a predetermined range. However, the present disclosure is not limited to this, and the sound generated by the sound generation unit 10 may have a frequency obtained by mixing a plurality of frequencies (for example, two frequencies of 400 Hz and 480 Hz) within a predetermined range. In this case, sounds having a plurality of frequencies may be generated from one sound generation unit 10 simultaneously or separately in time, or as illustrated in Fig. 6, may be generated from sound generation units 10 which are separate from each other.

When the sounds having a plurality of frequencies are generated from the sound generation unit 10 as described above, it is preferable that a plurality of sets of the double wall 20 and the intermediate layer 30 are provided. For example, as illustrated in Fig. 6, a first set A of a double wall 20A and an intermediate layer 30A and a second set B of a double wall 20B and an intermediate layer 30B are provided. In the set A, the double wall 20A and the intermediate layer 30A are configured to resonance-transmits only the sound having an assigned frequency. In the set B, the double wall 20B and the intermediate layer 30B are configured to resonance-transmits only the sound having an assigned frequency.

Superficially, in the set A and the set B, for example, a thickness of the intermediate layer 30A and a thickness of the intermediate layer 30B are configured to be different from each other according to the frequency of the generated sound.

In Fig. 6, as the sound generation unit 10, a sound generation unit 10A on a first set A side and a sound generation unit 10B on a second set B side are illustrated to be provided separately. Further, in Fig. 6, the outer wall portion 22 of the double wall 20A of the first set A and the outer wall portion 22 of the double wall 20B of the second set B are illustrated in common.

In the configuration illustrated in Fig. 6, the sound generation unit 10A and the sound generation unit 10B generate a sound having a corresponding frequency on the first set A side and the second set B side, respectively, and the double wall 20A and the intermediate layer 30A resonance-transmit only the sound having a corresponding frequency among the plurality of frequencies, and the double wall 20B and the intermediate layer 30B resonance-transmit only the sound having a corresponding frequency among the plurality of frequencies. In such a configuration, sounds having different frequencies can be propagated from the vehicle inner side to the vehicle outer side through the first set A side and the second set B side.

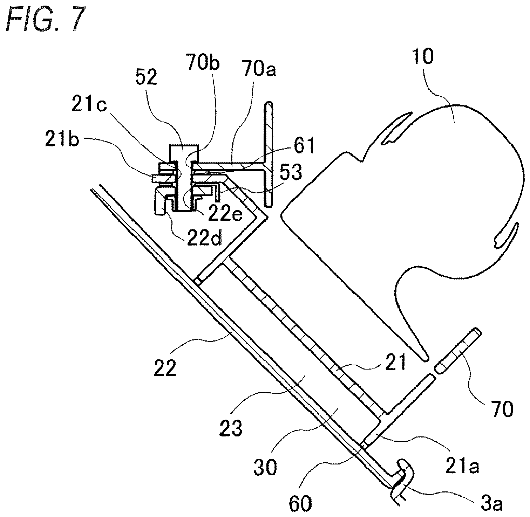

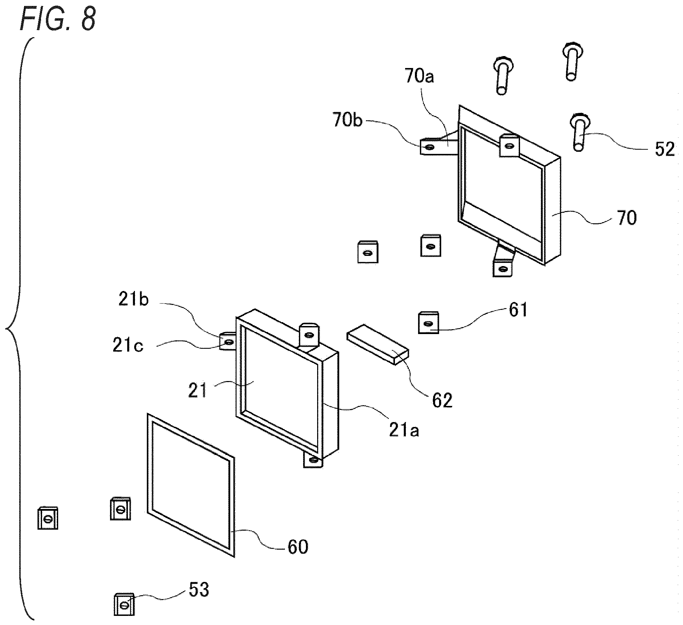

In the first to third embodiments described above, the hollow space 23 (and thus the intermediate layer 30) between the inner wall portion 21 and the outer wall portion 22 is surrounded over the entire periphery by the protruding portion 22b formed in an annular shape on the back surface side of the outer wall portion 22. However, the present disclosure is not limited to this, and as illustrated in Figs. 7 and 8, the hollow space 23 and thus the intermediate layer 30 may be surrounded over the entire periphery by a protruding portion 21a formed in an annular shape on a front surface side of the inner wall portion 21.

The protruding portion 21a of the inner wall portion 21 protrudes in an annular shape from a peripheral edge portion on the front surface of the inner wall portion 21 toward the back surface of the outer wall portion 22. Accordingly, the hollow space 23 and thus the intermediate layer 30 are surrounded over the entire periphery. In order to ensure airtightness of the hollow space 23 and the intermediate layer 30, it is preferable to dispose a cushioning member (cushion member) 60 between a tip of the protruding portion 21a of the inner wall portion 21 and the back surface of the outer wall portion 22. According to this configuration, it is possible to prevent the sound generated by the sound generation unit 10 from leaking from the hollow space 23 and to efficiently propagate the sound to the double wall 20.

In the above modification, the inner wall portion 21 and a hollow cylindrical duct 70 for guiding the sound generated by the sound generation unit 10 to the inner wall portion 21 may be attached and fixed to a structure (so-called Yakura or the like) 22d provided on the back surface side of the outer wall portion 22. As this attaching method, an attachment tool 52 such as a bolt or a screw may be used. In this configuration, the attachment tool 52 penetrates an attachment hole 21c of a flange portion 21b provided in the inner wall portion 21, an attachment hole 70b of a flange portion 70a provided in the duct 70, and an attachment hole 22e of the structure 22d in the outer wall portion 22 and is fastened to a spring nut 53.

In the attachment structure using the attachment tool 52, in order to absorb the vibration transmitted between the inner wall portion 21 and the duct 70 (particularly, the vibration from the inner wall portion 21 to the duct 70), a cushioning member (cushion member) 61 may be disposed between the flange portion 21b of the inner wall portion 21 and the flange portion 70a of the duct 70. According to this configuration, it is possible to make it difficult to transmit the vibration between the inner wall portion 21 and the duct 70, and to prevent the vibration from influencing the resonance transmission of the sound generated by the sound generation unit 10.

In the structure in which the hollow duct 70 guides the sound generated by the sound generation unit 10 to the inner wall portion 21 as described above, in order to prevent the duct 70 from vibrating due to the sound generated by the sound generation unit 10, a cushioning member (cushion member) 62 may be disposed on an inner surface of the duct 70 (for example, in the example shown in Figs. 7 and 8, only one of four inner surfaces of the duct 70, and it is preferable to cover all four inner surfaces of the duct 70). According to this configuration, it is possible to make it difficult for the duct 70 to vibrate due to the sound generated by the sound generation unit 10, and to efficiently guide the sound to the double wall 20.

In the first to third embodiments described above, the intermediate layer 30 formed in the closed hollow space 23 between the inner wall portion 21 and the outer wall portion 22 of the double wall 20 is an air layer. However, the present invention is not limited to this. As long as the intermediate layer 30 transmits the sound generated by the sound generation unit 10, the intermediate layer 30 may be a layer in which an argon gas, a liquid, or the like is enclosed in the hollow space 23, or the intermediate layer 30 in which argon gas, a liquid, or the like is enclosed in a bag shape may be inserted and disposed in the hollow space 23.

The present invention is not limited to the above embodiments and modifications thereof, and various modifications can be made without departing from the scope of the present invention.

**Claims**

1. A vehicle sound output device comprising:

   a sound generation unit configured to generate a sound having a predetermined frequency;
   a double wall disposed on a vehicle outer side with respect to the sound generation unit, and including an inner wall portion and an outer wall portion which are separated from each other in a vehicle inner-outer direction; and
   an intermediate layer which is formed in a closed space between the inner wall portion and the outer wall portion and through which the sound is transmitted.

2. The vehicle sound output device according to claim 1, further comprising:
   a guide wall extending from a sound generation unit side to a vehicle inner surface side of the inner wall portion in a cylindrical shape and forming a guide path guiding the sound to the double wall.

3. The vehicle sound output device according to claim 2, wherein:

   the guide wall has a bottom wall portion in which one cylinder end is closed and an opening in which the other cylinder end is open;
   the sound generation unit is attached to a bottom wall portion side of the guide wall to generate the sound toward an opening side of the guide wall; and
   the guide path is closed by the inner wall portion and the guide wall.

4. The vehicle sound output device according to any one of claims 1 to 3, wherein
   the intermediate layer has a thickness, a density, or a volume at which a resonance transmission phenomenon of the sound occurs from the inner wall portion to the outer wall portion.

5. The vehicle sound output device according to any one of claims 1 to 4, wherein
   the intermediate layer is an air layer.

6. The vehicle sound output device according to any one of claims 1 to 5, wherein:

   the predetermined frequency includes a plurality of frequencies different from each other;
   a plurality of sets each including the double wall and the intermediate layer are provided; and
   each intermediate layer transmits the sound having a corresponding frequency among the plurality of frequencies.

7. The vehicle sound output device according to any one of claims 1 to 6, wherein
   the predetermined frequency includes a fundamental frequency defined between 270 Hz and 600 Hz.

8. A vehicle sound propagation device comprising:

   a double wall disposed on a vehicle outer side with respect to a sound generation unit configured to generate a sound having a predetermined frequency, and including an inner wall portion and an outer wall portion which are separated from each other in a vehicle inner-outer direction; and
   an intermediate layer which is formed in a closed space between the inner wall portion and the outer wall portion and through which the sound is transmitted.

*FIG. 1*

*FIG. 2*

## FIG. 3

TRANSMISSION LOSS TL [dB]

RESONANCE
TRANSMISSION
PHENOMENON

- - - - - - - - - SINGLE WALL

——————— DOUBLE WALL

FREQUENCY f [Hz]

FIG. 4

FIG. 5

FIG. 6

*FIG. 7*

FIG. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/254191 A1 (YASUIKE MAKOTO [JP] ET AL) 11 September 2014 (2014-09-11) * paragraph [0106]; figure 7 * ----- | 1,4-8 | INV. B60R13/04 B60Q5/00 B60R19/48 G10K9/00 |
| A | JP 2010 208557 A (DENSO CORP) 24 September 2010 (2010-09-24) * paragraph [0028]; figures 1,2,4 * ----- | 1-8 | |
| A | WO 2020/249660 A1 (ASK IND SPA [IT]; R C F S P A [IT]) 17 December 2020 (2020-12-17) * page 11, line 24 – page 12, line 10; figures 12-14 * ----- | 1-8 | |
| A | US 2014/121864 A1 (NAKATANI HIDENORI [JP] ET AL) 1 May 2014 (2014-05-01) * paragraphs [0030], [0034]; claim 1; figures 1,2,6 * ----- | 1-8 | |

| TECHNICAL FIELDS SEARCHED (IPC) |
|---|
| B60R B60Q G10K |

The present search report has been drawn up for all claims

| Place of search | Date of completion of the search | Examiner |
|---|---|---|
| Berlin | 7 February 2023 | Matos Gonçalves, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 3982

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2023

| Patent document cited in search report | | Publication date | Patent family member(s) | | Publication date |
|---|---|---|---|---|---|
| US 2014254191 | A1 | 11-09-2014 | CN | 103999481 A | 20-08-2014 |
| | | | JP | 5944654 B2 | 05-07-2016 |
| | | | JP | 2013118545 A | 13-06-2013 |
| | | | US | 2014254191 A1 | 11-09-2014 |
| | | | WO | 2013084639 A1 | 13-06-2013 |
| JP 2010208557 | A | 24-09-2010 | NONE | | |
| WO 2020249660 | A1 | 17-12-2020 | EP | 3984019 A1 | 20-04-2022 |
| | | | MA | 56171 A | 20-04-2022 |
| | | | WO | 2020249660 A1 | 17-12-2020 |
| US 2014121864 | A1 | 01-05-2014 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004330852 A